# EUROPEAN PATENT SPECIFICATION

(11) **EP 2 611 556 B1**
(45) Date of publication and mention of the grant of the patent: **30.04.2014**
(21) Application number: 10766353.6
(22) Date of filing: 21.09.2010
(51) Int. Cl.: B21D 39/04, F16L 13/16

(54) **METHOD FOR CONNECTING HOLLOW CYLINDRICAL ELEMENTS, ESPECIALLY PIPES**
VERFAHREN ZUR VERBINDUNG HOHLER ZYLINDRISCHER ELEMENTE, INSBESONDERE RÖHREN
PROCÉDÉ DE RACCORDEMENT D'ÉLÉMENTS CYLINDRIQUES CREUX, EN PARTICULIER DES TUYAUX

(30) Priority: 30.08.2010 PL 39226310
(43) Date of publication of application: 10.07.2013
(73) Proprietor: Instytut Obróbki Plastycznej, 61-139 Poznan (PL)
(72) Inventor: WISNIEWSKI, Jan, 61-159 Poznan (PL); DRENGER, Tadeusz, 60-371 Poznan (PL)
(74) Representative: Luczak, Jerzy
(86) International application number: PCT/PL2010/000092
(87) International publication number: WO 2012/030240

(56) References cited:
- EP-A1- 1 970 138
- DE-A1- 4 243 625
- DE-A1- 19 731 563
- DE-A1-102005 030 587

## Description

The subject of the invention is a method for connecting elements with a cylindrical outline of external walls, especially pipes, which is used for the connecting of pipes and other elements with a cylindrical outline of external walls.

In known solutions for connecting products in the spinning process, a connection by repeated bending of edges over multiple stencils is used.

In the patent claim PL-340241 a solution was presented, wherein a buttress sleeve is placed on the pipe ends, and then pressed to achieve a connection.

In the EP 1970138 A1 patent a description of a connection for pipes with the same internal diameter of one pipe and external diameter of another pipe, inserted into the first pipe was described, wherein a rotating expander acts on the internal surface of the internal pipe, causing a permanent connection by rolling of the connecting walls in the zone the tool is acting on.

It is known from German patent application No. DE 197 31 563 A1, a method for producing a dense and solid pipe joint without the use of additional sealing material, in particular for thin-walled pipes in which an end of a tube is conically bevelled and both tube ends are pressed into each other, lies in the fact that:
- the end portion of which is provided as the outer tube pipe or tube stub, the original inner diameter which is smaller than the original outer diameter of which is provided as the inner tube pipe or tube stub, to be expanded to a particular dependent on pipe diameter and wall thickness length taper up to a level that the inner diameter of the open cone end is equal to the original outer diameter of the inner tube is provided as a tube or tube stub mounting a mass plus the tolerance,
- the two axially aligned positioned ends of the tubes or tube stub of exceeding the elastic limits of both the inner tube and the outer tube material in the axial direction are reciprocally pressed under ever-increasing pressure force without any interruption, until the specified overlap length is reached.

It is known from German patent application DE10 2005 030587 A1, where process to join two sections of metal pipe e.g. automotive exhaust pipe by application of internal high pressure, lies in the fact that a method for joining two particular tube components by means of an active-medium based forming process, wherein the components are arranged to mate with the overlapping end portions in the internal high pressure forming tool, at least a shaped element as a positive and / or frictional connection is formed by the active medium in the area of overlap and the overlapping end portions of the components form a sealing edge and / or a sealing surface for sealing the joining action medium.

It is known from German patent application DE 42 43 625 A1 the solution presented in the patent description, wherein connection pieces for cold serving tubes, in particular small-caliber plastic pipes, having a tapered neck collar surface, characterized in that the cone angle of the conical spigot collar surface relative to the central axis of the connecting piece is less than 30, and that the Stutz collar surface end face with the cylindrical inner lateral surface forms a sharp annular cutting edge.

The presented methods for connecting pipe elements do not solve the problem of permanent connection of many cylindrical-shaped elements, including pipe products, in the process of shape pressing, and especially elongating roll forming with the use of the forming roller as the tool.

The solution described below fills a gap in the requirements for the use of new methods of connecting of products with cylindrical outline of external walls, especially pipes.

The essence of the invention is a method for connecting elements with cylindrical external walls, especially pipes, by acting on the external surface with tools having the form of a roller, is that on a mandrel, which is a stencil placed in the spindle of the machine tool, two coaxial cylindrical elements are placed, whereas on the element further from the spindle at least two support-mounted rollers with the radius of the curved working surface of 3-5 mm with the feed of rollers 0.15 - 0.25 mm/rotation and the negative gap of 0.2-0.8 mm with the relative deformation of ε = 25 - 40 %, up to the dislocation of the drawbead to the front zone of the element closer to the spindle, burnishing of this drawbead over the front zone of the element closer to the spindle and rolling it over the front zone of the element closer to the spindle.

It is advantageous when in the frontal zone of the element closer to the spindle the rollers are spaced by a distance of 0.2 -1.2 mm.

It is also advantageous when the rollers are located in one plane.

It is also advantageous, when the rollers are located in planes transposed along the axis of rotation by 0.2 - 2.0 mm.

It is also advantageous when the relative movement of cylindrical elements and rollers is achieved through the rotation of the cylindrical elements.

It is also advantageous when the relative movement of cylindrical elements and rollers is achieved through the rotation of the rollers around the cylindrical elements.

The use of the solution presented in the invention enables the following technical and utility effects:
- ability to perform an operation of a permanent connection of two or more products,
- ability to connect products made of different materials,
- ability to use the method for connecting both pipes and elements with an envelope collar or such as a cylindrical die stamping with a bottom,
- ability to construct on any machine tool, on the condition that it can have at least two rollers installed on the support
- significant reduction of the time used for connection of cylindrical elements when compared to the methods used so far,
- use of initial elements in their entirety,
- elimination of technological excess materials in the connection process,
- use of two operations of elongating roll forming and connecting at the same time,
- ability to use the process once or repeat it many times, depending on the grade of connected materials and the amount of deformation,
- ability to control the movement of the roller through a controller,
- low cost of execution compared to other methods of connection.

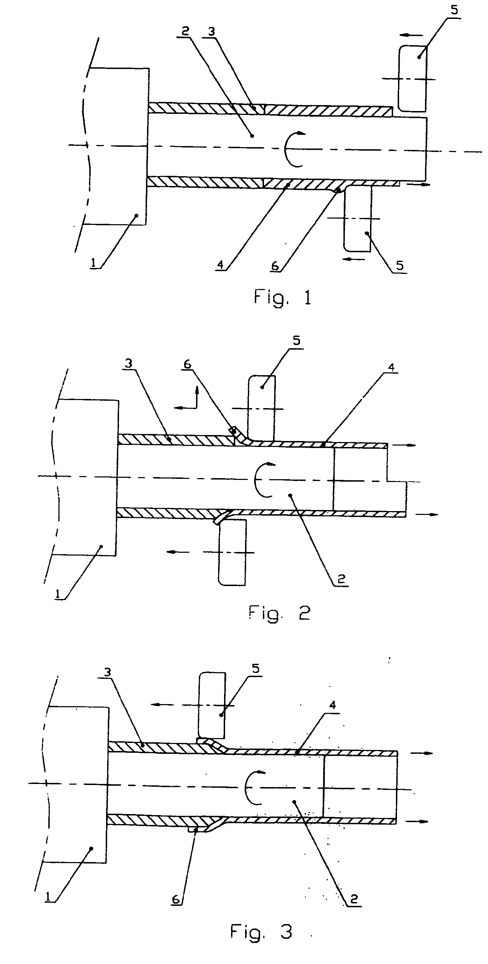

The subject of the invention was explained closer in a sample implementation shown in the attached figure, where fig. 1 presents relative location of connected elements and rollers in the initial phase of the implementation of the method, fig. 2, shows relative location of connected elements and rollers in the final phase of the implementation of the method, and fig. 3 shows the rolling of the connection, that is the final phase of implementation of the method.

The method is implemented in a machine tool equipped with a spindle 1 with a horizontal axis. On the spindle, which is a stencil 2, located in the spindle of the machine tool, two pipes are placed coaxially: a closer 3 and further 4 pipe in relation to the spindle 1. Over the pipe 4 further from the spindle 1 at least two rollers 5 act, placed on supports not shown in the figure, with a curved working surface with a radius within (3-5) mm limits. The movement of rollers 5 over the axis is conducted with a feed of 0.15 - 0.25 mm/rotation. The location of rollers 5 in relation to the external surface of treated further pipe 4 creates a negative gap of 0.2-0.8 mm with the relative deformation of ε = 25-40 %. During the movement of rollers 5 along the further pipe 4 the drawbead 6 is created and the material is moved to the frontal zone of the pipe 3 closer to the spindle 1. The drawbead 6 is then burnished over the frontal zone of the closer pipe 3. In the final stage the drawbead 6 is rolled over the frontal zone of the pipe 3 closer to the spindle 1.

Rollers 5 are located in one plane, perpendicular to the lengthwise axis of the 3, 4 pipes or are located in different planes, perpendicular to the lengthwise axis, at a distance of 0.2 - 2.0 mm.

When the rollers 5 are located in the zone near the end of the pipe 3 closer to the spindle 1, they are drawn aside by a distance of 0.2 - 1.2 mm and a process of rolling of the drawbead 6 over the end of the closer pipe 3, thus achieving a closer and hermetic connection.

Relative movement of cylindrical elements 3, 4 and rollers 5 is performed by the rotation of cylindrical elements 3, 4 or the rotation of rollers 5 around cylindrical elements 3, 4.

During movement over a set track of the unit of rollers 5 with an appropriate feed and relative deformation, a decrease of the thickness of the wall of the cylindrical element 4 and a simultaneous increase of the external and internal diameter of the shaped element, creating a drawbead 6. The particular effects of the connection are achieved by the connection of cylindrical elements 3, 4 with a significant difference of (hardness) plasticity.

## Claims

1. A method for connecting elements with cylindrical external walls, especially pipes, by acting on the external surface with tools having the form of a roller, **characterized in that** on a mandrel, which is a stencil (2) placed in the spindle (1) of the machine tool, two coaxial cylindrical elements (3, 4) are placed, whereas on the element (4) further from the spindle (1) at least two support-mounted rollers (5) with the radius of the curved working surface of 3-5 mm with the feed of rollers (5) 0.15 - 0.25 mm/rotation and the negative gap of 0.2-0.8 mm with the relative deformation of ε = 25- 40 %, up to the dislocation of the drawbead (6) to the front zone of the element (3) closer to the spindle (1), burnishing of this drawbead (6) over the front zone of the element (3) closer to the spindle (1) and rolling it over the front zone of the element (3) closer to the spindle (1).

2. A method in accordance with claim 1, **characterized in that** in the frontal zone of the element (3) closer to the spindle (1), the rollers (5) are spaced by a distance of 0.2 - 1.2 mm.

3. A method in accordance with claim 1, **characterized in that** the rollers (5) are placed in one plane.

4. A method in accordance with claim 1, **characterized in that** the rollers (5) are located in planes transposed along the axis of rotation of the spindle (1) by 0.2 - 2.0 mm.

5. A method in accordance with claim 1, **characterized in that** the relative movement of cylindrical elements (3, 4) and rollers (5) is achieved through the rotation of the cylindrical elements (3, 4).

6. A method in accordance with claim 1, **characterized in that** the relative movement of cylindrical elements (3, 4) and rollers (5) is achieved through the rotation of rollers (5) around the cylindrical elements (3, 4).

## Patentansprüche

1. Methode zum Verbinden der Bauteile mit Außenwänden vom zylindrischen Profil, insbesondere Rohre, durch Einwirken auf die Außenfläche mit Werkzeugen in Form einer Rolle, **dadurch gekennzeichnet, dass** auf den Dorn, der als Drückfutter (2) gilt und in der Spindel (1) der Werkzeugmaschine sitzt, zwei zylindrische Bauteile (3, 4) aufgesetzt werden, wobei auf das Bauteil (4), welches von der Spindel (1) weiter entfernt ist, mit mindestens zwei auf den Supporten sitzenden Rollen (5) mit einer bogenartigen Laufbahn mit einem Radius von 3 - 5 mm und einem Vorschub der Rollen (5) von 0,15 - 0,25 mm/Umdrehung und einer negativen Fuge mit einer Breite von 0,2 - 0,8 mm und einer spezifischen Verformung von ε = 25 - 40 % eingewirkt wird, und zwar bis zur Verlagerung des Ziehwulstes (6) in den vorderen Bereich des Teils (3), welches an der Spindel (1) näher liegt, Glanzdrücken dieses Zichwulstes (6) auf den vorderen Bereich des Teils (3), welches an der Spindel (1) näher liegt und dessen Walzung im vorderen Bereich des Teils (3), welches an der Spindel (1) näher liegt.

2. Methode nach Patentanspruch 1, **dadurch gekennzeichnet, dass** im vorderen Bereich des Teils (3), welches an der Spindel (1) näher liegt, die Rollen (5) um eine Größe von 0,2 - 1,2 mm auseinander gerückt werden.

3. Methode nach Patentanspruch 1, **dadurch gekennzeichnet, dass** die Rollen (5) in einer Ebene angeordnet sind.

4. Methode nach Patentanspruch 1, **dadurch gekennzeichnet, dass** die Rollen (5) in den Ebenen angeordnet sind, die die Rotationsachse der Spindel (1) entlang um 0,2 - 2,0 mm zueinander verschoben sind.

5. Methode nach Patentanspruch 1, **dadurch gekennzeichnet, dass** die Relativbewegung der zylindrischen Teile (3, 4) und Rollen (5) durch Drehung der zylindrischen Teile (3, 4) erfolgt.

6. Methode nach Patentanspruch 1, **dadurch gekennzeichnet, dass** die Relativbewegung der zylindrischen Teile (3, 4) und Rollen (5) durch Drehung der Rollen (5) um die zylindrischen Teile (3, 4) herum erfolgt.

## Revendications

1. Procédé de raccordement des éléments présentant le profil cylindrique des parois extérieures, surtout des tubes, en agissant sur la surface extérieure à l'aide d'outil sous forme d'un galet, **caractérisé en ce que** l'on fait encastrer d'une façon coaxiale deux éléments cylindriques (3, 4) sur le mandrin qui est un gabarit (2) situé dans la broche (1) d'un tour, l'élément plus éloigné (4) de la broche (1) étant influencé par deux galets (5) au minimum, montés sur des supports, avec le rayon de la surface arquée utile de 3 - 5 mm, le pas des galets (5) de 0,15 - 0,25 mm/tour, l'intervalle négative de 0,2 - 0,8 mm et avec la déformation relative ε = 25 - 40 %, jusqu'au déplacement du jonc de retenue (6) vers la partie antérieure de l'élément plus proche (3) de la broche (1), ensuite brunissage de ce seuil vers la partie antérieure de l'élément plus proche (3) de la broche (1) et finalement son laminage dans la partie antérieure de l'élément plus proche (3) de la broche (1).

2. Procédé selon la revendication 1 **caractérisé en ce que** dans la partie antérieure de l'élément plus proche (3) de la broche (1), les galets (5) sont écartés à la distance de 0,2 - 1,2 mm.

3. Procédé selon la revendication 1 **caractérisé en ce que** les galets (5) sont situés sur le même plan.

4. Procédé selon la revendication 1 **caractérisé en ce que** les galets (5) sont situés sur les plans déplacés le long de l'axe de rotation de la broche (1) de 0,2 2,0 mm.

5. Procédé selon la revendication 1 **caractérisé en ce que** le mouvement relatif des éléments cylindriques (3, 4) et des galets (5) se fait grâce à la rotation des éléments cylindriques (3, 4).

6. Procédé selon la revendication 1 **caractérisé en ce que** le mouvement relatif des éléments cylindriques (3, 4) et des galets (5) se fait grâce à la rotation des galets (5) autour des éléments cylindriques (3, 4).
